# EUROPÄISCHE PATENTSCHRIFT

(11) **EP 0 802 596 B1**
(45) Veröffentlichungstag und Bekanntmachung des Hinweises auf die Patenterteilung: **09.07.2003**
(21) Anmeldenummer: 97106218.7
(22) Anmeldetag: 16.04.1997
(51) Int. Cl.: H02B 11/24

(54) **Schaltfeld mit Shutterblenden**
Switchboard with shutter plates
Tableau de distribution avec obturateur panneau

(30) Priorität: 18.04.1996 DE 19615297
(43) Veröffentlichungstag der Anmeldung: 22.10.1997
(73) Patentinhaber: AEG Sachsenwerk GmbH, D-93055 Regensburg (DE)
(72) Erfinder: Herrmann, Johann, 93055 Regensburg (DE)
(74) Vertreter: Dreiss, Fuhlendorf, Steimle & Becker

(56) Entgegenhaltungen:
- DE-A- 2 853 373
- DE-U- 8 512 452
- GB-A- 807 952
- GB-A- 881 705
- US-A- 4 285 026

## Beschreibung

Die Erfindung betrifft ein Schaltfeld gemäß dem Oberbegriff des ersten Anspruchs.

Ein solches Schaltfeld ist aus der DE 28 53 373 A1 bekannt. Diese Schrift zeigt eine Schaltzelle mit einem feststehenden Zellenteil, einem ein- und ausfahrbaren Gerätewagen, der im eingefahrenen Zustand mit seinen Einfahrkontakten durch Öffnungen einer Schottwand des feststehenden Zellenteiles zu hinter der Schottwand angeordneten Anlagenteilen greift, und mit beim Ein- und Ausfahren des Gerätewagens betätigbaren Abdeckplatten für die Schottwand-Öffnungen. Jeder Abdeckplatte sind zwei Betätigungsstangen zugeordnet, die durch einen Kettenantrieb miteinander verbunden sind. Der Kettenantrieb ist so ausgestaltet, dass die Abdeckplatten durch eine Bewegung des Gerätewagens betätigt werden und relativ zueinander eine gegenläufige Bewegung ausführen.

Bei einem weiteren bekannten Schaltfeld für Mittelspannungsanwendung (DE 3812853 C1) ist in einem Gerüst auf in die Feldtiefe hineinlaufenden Laufschienen ein Fahrgestell mit einem Leistungsschalter je Phase des dreiphasigen Netzes verfahrbar angeordnet. Jeder Leistungsschalter ist mit zwei übereinander angeordneten Kontaktarmen versehen. Im rückwärtigen Abschnitt des Gerüsts befinden sich den Kontaktarmen zugeordnete Gegenkontakte, wobei die oberen drei Gegenkontakte hinter einer senkrecht zur Einfahrrichtung des Fahrgestells stehenden Trennwand angeordnet sind. Den Gegenkontakten sind in der Trennwand angepaßte Durchbrüche zugeordnet, durch welche die zugehörigen oberen Kontaktarme der Schalter hindurchgreifen, wenn das Fahrgestell in seine endgültige Einfahrstellung gebracht ist, in welcher alle Kontaktarme mit den zugeordneten Gegenkontakten in elektrischer Steckverbindung stehen. Um insbesondere bei vollkommen aus dem Gerüst herausgefahrenem Fahrgestell einen Zugriff zu den mit spannungsführenden Sammelschienen verbundenen oberen Gegenkontakten zu verhindern, ist den Durchbrüchen eine Shutterblendenanordnung zugeordnet, die über ein vom Fahrgestell gesteuertes Hebelgestänge aus einer die Durchbrüche verschließenden Lage durch Parallelverschiebung zur Trennwand in eine öffnungsstellung gesteuert werden, wenn das Fahrgestell so weit in das Gerüst eingeschoben ist, daß es mittels einer Quertraverse daran verriegelt werden kann.Dabei befindet es sich dann in einer betriebsmäßigen Anfangsstellung, der Ausfahrstellung, in welcher die Kontaktarme noch vor der Ebene der Trennwand stehen. Zum Verstellen des Fahrgestells aus der Ausfahrstellung in die Einfahrstellung ist an der Traverse eine Gewindespindel gelagert, die bei ihrer ersten Drehung beim Einfahren bzw. ihrer letzten Drehung beim Ausfahren mit dem Hebelgestänge gekoppelt ist und über dasselbe die funktionsgerechte Verstellung der Shutterblende bewirkt. Nachteilig bei diesem Aufbau ist der erhebliche Aufwand für das oberhalb des Fahrgestells bis zur Frontseite des Gerüsts und nach unten bis zur Traverse gezogene Hebelgestänge, für das innerhalb der Traverse ein zusätzlicher Betätigungsmechanismus zur Kopplung mit der Gewindespindel erforderlich ist. Zudem ist nur die obere Reihe der Gegenkontakte gegen Zugriff durch eine Shutterblende geschützt.

Der Erfindung liegt die Aufgabe zugrunde, bei einem Schaltfeld gemäß dem Oberbegriff des ersten Anspruchs Maßnahmen zu treffen, durch welche bei kompaktem Aufbau ein Schutz aller Gegenkontakte gegen Zugriff ermöglicht wird, wobei die shutterblenden durch eine Alternative an einem Kettenantrieb bewegt werden.

Die Lösung dieser Aufgabe erfolgt gemäß der Erfindung durch die kennzeichnenden Merkmale des ersten Anspruchs.

Bei einer Ausgestaltung eines Schaltfeldes gemäß der Erfindung können alle feststehenden Gegenkontakte hinter der mit einer entsprechenden Anzahl von Durchbrüchen versehenen Trennwand angeordnet werden, wobei die Durchbrüche in enger Höhenzuordnung vorgesehen werden können, weil die jeweils einer waagerechten Zeile von Durchbrüchen zugeordneten Shutterblenden zum Schließen in ihrer Bewegungsebene aufeinander zu- und zum Freigeben der Durchbrüche voneinander wegbewegt werden. In der Freigabestellung liegt somit die der oberen Zeile von Durchbrüchen zugeordnete Shutterblende oberhalb dieser Durchbrüche und die der unteren Zeile von Durchbrüchen zugeordnete Shutterblende unterhalb dieser Durchbrüche. Den feststehenden Gegenkontakten zugeordnete, dieselben mit Abstand umgebende Isolierhülsen, können daher beliebig eng übereinander angeordnet werden, weil zwischen dem jeweiligen Gegenkontaktpaar keine Shutterblende zu liegen kommt, die den notwendigen Isolierabstand beeinträchtigen könnte. In Ausfahr- oder Trennstellung des Fahrgestells sind somit alle spannungsführenden Gegenkontakte gegen Zugriff sicherbar.

Ein für den gegenläufigen Antrieb der Shutterblenden geeignetes Hebelgetriebe weist vorzugsweise eine quer zur Verstellrichtung der Shutterplatinen verschiebbar an der Trennwand gehalterte Schubstangenanordnung auf, die in ihrem axialen Endbereich jeweils mit einem Hebelarm von zweiarmigen Hebeln in Antriebsverbindung steht. Die Drehpunkte dieser zweiarmigen Hebel sind dabei gegenüber der Trennwand ortsfest angeordnet. An die zweiten Hebelarme ist je eine stumpfwinklig geknickte Stützstange angelenkt, von welchen eine mit der unteren und die andere mit der oberen Shutterblende in Eingriff steht. Die Knickung der Stützstangen ermöglicht es, die Schubstangenanordnung in der Höhe anzuordnen, in welche die untere Shutterblende in der Freigabestellung der Durchbrüche abtaucht, ohne in den Überdeckungsbereich mit den für die Kontakte der einzufahrenden Schalter erforderlichen Durchbrüche zu gelangen. Die Anordnung ist dabei so getroffen, daß in einer Mittelstellung der Schubstangenanordnung das gesamte Hebelgetriebe in einer spiegelsymmetrischen Lage steht, in welcher die mit den Stützstangen verbundenen zweiten Hebelarme der zweiarmigen Hebel dachförmig aufeinander zugeneigt sind. Durch Verschieben der Schubstangenanordnung in eine Endstellung legt sich daher der eine Hebelarm weiter zur Schubstangenanordnung hin und bewegt dementsprechend die daran angelenkte Stützstange zur Schubstangenanordnung hin. Dagegen schwenkt der zweite Hebelarm des am anderen Ende der Schubstangenanordnung angeordneten zweiarmigen Hebels vorzugsweise über die senkrechte Lage hinaus nach oben und verstellt die zugeordnete Schubstange dementsprechend von der Schubstangenanordnung weg. Bei einer Verschiebung der Schubstangenanordnung in Gegenrichtung kehrt sich sinngemäß die Lage der einzelnen Antriebshebel um. Dabei ist es zweckmäßig, die eine Stützstange an einer unterseitigen Lasche der oberen Shutterblende und die andere Schubstange an einer nach oben gerichteten Lasche der unteren Shutterblende anzulenken. Soll beispielsweise bei Inspektionsarbeiten bei herausgefahrenem Fahrgestell ein öffnen nur einer Shutterblende möglich sein, wird die Schubstangenanordnung mittig geteilt. Ein im Betrieb notwendiger Antrieb wird jedoch so angekoppelt, daß die Teilschubstangen in starrer Zuordnung gekoppelt sind.

Der Antrieb für die Shutterblenden ist vorzugsweise in einer Kassette angeordnet, welche in das mit der Trennwand verbundene Gerüst einzuschieben ist und die auf Laufschienen das Fahrgestell mit den aufgesetzten Schaltern trägt. Bei in das Gerüst eingeschobener Kassette ist dann der Antrieb mit der Schubstangenanordnung gekuppelt. Als Antriebseinrichtung wird dabei aus Sicherheitsgründen eine Gewindespindel verwendet, mittels welcher das Fahrgestell in der Kassette aus einer Ausfahr- oder Trennstellung betriebsmäßig in eine Einfahrstellung bewegt werden kann, in welcher die Kontaktarme der Schalter mit den im Gerüst festgesetzten Gegenkontakten in elektrischen und mechanischen Eingriff gelangen. Bei der ersten Drehung der Spindel zum Ausfahren aus bzw. bei der letzten Drehung zum Einfahren in die Ausfahrstellung wird dabei der Shutterantrieb betätigt. Hierzu kann in der Kassette eine parallel zur Schubstangenanordnung verschiebbar gelagerte Schieberplatine mit einem Steckkupplungsteil für die Schubstangenanordnung gelagert sein. Um die nur bei einer bestimmten Drehung der Gewindespindel zulässige Verstellung der Schieberplatine zu bewerkstelligen, ist mit der Gewindespindel eine Exzenterscheibe mit einem Exzenterzapfen getrieblich verbunden.Derselbe wirkt einerseits zum Beispiel zum öffnen der Shutterblenden bei der ersten Drehung der Gewindespindel mit einer an der Schieberplatine vorgesehenen Vortransportflanke, bei der Einfahrbewegung zusammen; und der andererseits bei der letzten Drehung beim Einfahren in die Ausfahrstellung mit einer Rücktransportflanke an einem Steuerhebel zusammenwirkt, der schwenkbar an der Steuerplatine gelagert ist und der nur während der ersten bzw. letzten Drehung der Gewindespindel im Wirkungsbereich des Exzenterzapfens steht. Zu diesem Zweck ist der Steuerhebel mit einer geneigten Steuerflanke versehen, deren Neigung abhängig vom maximalen Verschiebeweg der Schieberplatine und dem Vorschub der Gewindespindel ist. Diese Steuerflanke steht in Eingriff mit einem Steuerstab, der abhängig von der Stellung eines Gewindemutterstücks auf der Gewindespindel oder des Fahrgestells erst nach der ersten Umdrehung der Gewindespindel den Steuerhebel aus dem Wirkungsbereich des Exzenterzapfens schwenkt bzw. erst vor der letzten Umdrehung der Gewindespindel wieder in den Wirkungsbereich des Exzenterzapfens schwenken läßt. Durch das Zusammenwirken des Exzenterzapfens mit der Rückstransportflanke des Steuerhebels wird dann die Schieberplatine wieder in die Ausgangslage zurücktransportiert und damit die Shutterblenden geschlossen.

Die Erfindung ist nachfolgend anhand der Prinzipskizzen eines Ausführungsbeispiels näher erläutert.

Es zeigen:
- Figur 1: eine Seitenschnittdarstellung eines Schaltfelds mit einem in Einfahrstellung befindlichen Fahrgestell und geöffneten Shutterblenden an einer Trennwand,
- Figur 2: eine Frontansicht auf die Trennwand mit Hebelgetriebe bei geschlossener Lage der Shutterblenden,
- Figur 3: eine Draufsicht auf eine Antriebsanordnnung für das Hebelgetriebe und
- Figur 4: eine Seitenansicht der Anordnung nach Figur 3.

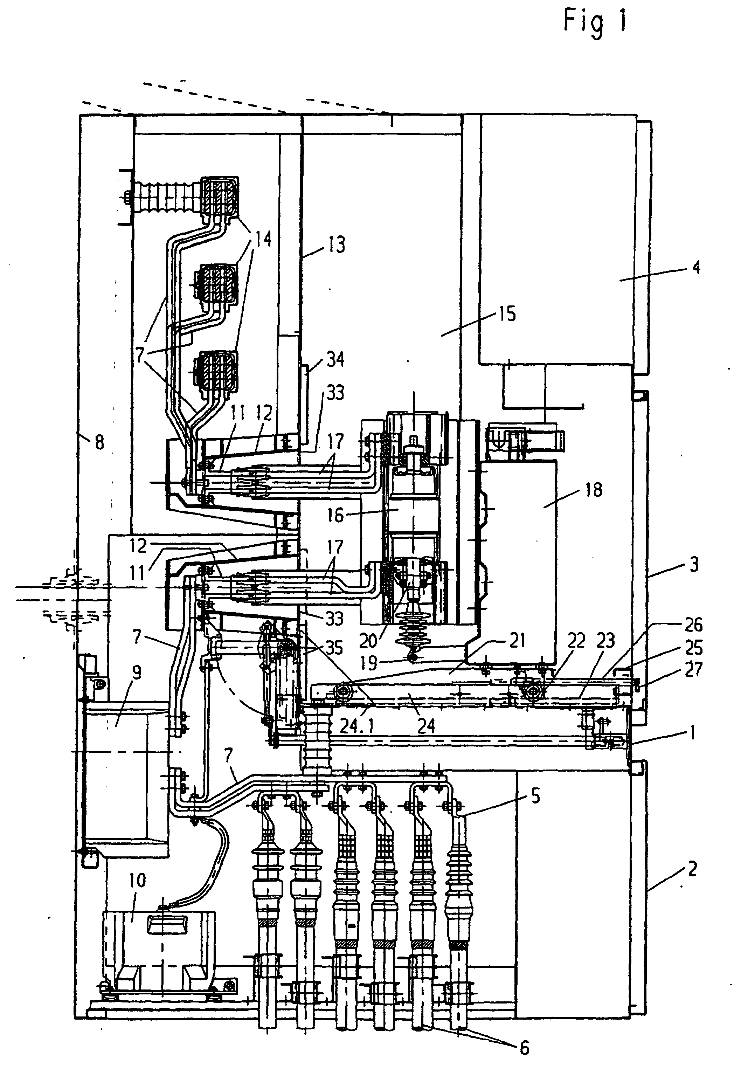

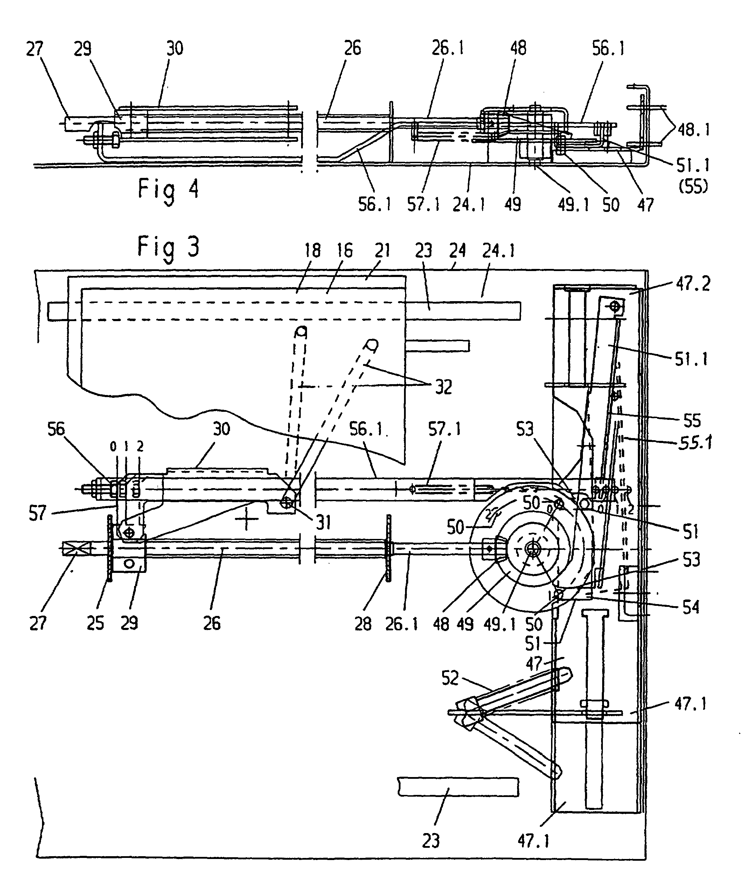

Ein Schaltfeld, das insbesondere für die Anwendung in Mittelspannungsnetzen geeignet ist, weist ein quaderförmiges Gerüst (1) auf, das frontseitig im unteren Bereich und im mittleren Bereich je eine Tür (2,3) und im oberen Bereich einen Steuerkasten (4) aufweist. Durch die untere Tür (2) ist ein Kabelraum (5) mit von unten eingeführten Kabeln (6) vorgesehen, die über Stromschienen (7) je Phase mit einem an der Rückseite (8) des Gerüsts (1) angeordneten Stromwandler (9) und einem darunter angeordneten Spannungswandler (10) elektrisch verbunden sind. Von den Stromwandlern 9 führen die Stromleiter 7 zu darüber angeordneten Gegenkontakten 11, die über Isolierhülsen 12 an einer mit dem Gerüst 1 verbundenen Zwischenwand 13 festgesetzt sind. Darüber befindet sich in entsprechender Anordnung eine weitere Isolierhülse 12 mit darin festgesetztem Gegenkontakt 11, der jeweils über Stromleiter 7 mit einer Sammelschiene 14 eines dreiphasigen Sammelschienensystems verbunden ist. Bei dreiphasiger Ausgestaltung sind jeweils drei Gegenkontakte 11 in waagerechter Richtung nebeneinander in der Trennwand 13 angeordnet.
Oberhalb des Kabelraums 5 und zwischen der mittleren Tür 3 sowie der Trennwand 13 befindet sich ein Schalterraum 15, in dem je Phase ein Leistungsschalter 16 in Form eines Vakuumschalters mit senkrechter Achse angeordnet ist. Mit den Anschlüssen des Leistungsschalters 16 sind in der Höhe mit Abstand übereinander angeordnete Kontaktarme 17 verbunden, die in die Gerüsttiefe hineinragen und in der dargestellten Einfahrstellung des Leistungsschalters 16 in elektrischer Steckkontaktverbindung auch mit unteren gerüstfesten Gegenkontakten 11 stehen. Die Leistungsschalter 16 sitzen an einem Antriebskasten 18, von dem eine Betätigungsstange 19 zum beweglichen Kontaktbolzen 20 des Leistungsschalters führt und über den die Ein- oder Ausschaltung des jeweils zugeordneten Leistungsschalters 16 erfolgt. Der Antriebskasten 18 ist auf einem Fahrgestell 21 montiert, das über Laufräder 22 in Laufschienen 23 verfahrbar geführt ist, welche aus dem Bereich der Tür 3 in die Gerüsttiefe zur Trennwand 13 hin parallel zueinander verlaufen. Die Laufschienen 23 sitzen auf einer Bodenplatine 24.1 einer aus Stabilitätsgründen wannenförmig gestalteten Einschubkassette 24, welche nach dem Einschieben der aus der Kassette 24, dem Fahrgestell 21, dem Antriebskasten 18 und den Leistungsschaltern 16 gebildeten Schaltwagen-Einheit mittels einer horizontal verlaufenden Traverse 25 lösbar am Gerüst 1 arretiert wird. Beim Einsetzen dieser Einheit in den Schalterraum 15 befindet sich jedoch das Fahrgestell 21 mit dem Antriebskasten 18 und den Leistungsschaltern 16 in einer Ausfahrstellung oder Trennstellung, in welcher der der Tür 3 zugewandte Antriebskasten an die Tür 3 angenähert ist und die Steckverbindungen 11,17 durch entsprechend weit zur Tür 3 hin verstellte Kontaktarme 17 aufgetrennt sind. Zum Verfahren des Fahrgestells 21 in der Kassette 24 ist eine Gewindespindel 26 vorgesehen, welche gegen axiales Verstellen gesichert in der Traverse 25 drehbar gelagert ist und ein zur Tür 3 hinweisendes Kuppelstück (27) zum Aufstecken einer Handkurbel aufweist. Die zumindest an ihrem inneren Ende 26.1 zusätzlich auf der Bodenplatte 24.1 der Kassette 24 in einer Stützlasche 28 gelagerte Gewindespindel 26 trägt auf ihrem Gewindeabschnitt ein Gewindemutterstück 29, welches durch Drehen der Gewindespindel 26 aus der in Figur 3 dargestellten, der Traverse 25 benachbarten Ausgangsstellung nach dem Einsetzen der Kassette und Verriegeln der Traverse im Gerüst 1 so weit zu verstellen ist, bis es benachbart zur Stützlasche 28 gewandert ist. In der in Figur 3 dargestellten linken Auslangslage des Gewindemutter-stücks 29 befindet sich das Fahrgestell 21 mit dem Leistungs-schalter 16 in Ausfahrstellung mit getrennten Kontakten 11,17 , während es sich bei an die Stützlasche 29 angenähertem Gewindemutterstück 29 in der Position gemäß Figur 1 mit zusammengesteckten Kontakten 11,17 befindet.

Mit dem Gewindemutterstück 29 ist ein Lenkerhebel 30 schwenkbar verbunden, der andernends am Kniebelgelenkpunkt 31 eines Kniehebelpaares 32 angelenkt ist, das einerseits an der Bodenplatte 24.1 und andererseits am Fahrgestell 21 schwenkbar befestigt ist. Vorzugsweise sind zwei solcher Kniehebelgetriebe 30,31,32 in spiegelbildlicher Anordnung zur Gewindespindel 26 vorgesehen, wobei jeweils die Kniehebel der Kniehebelpaare 32 in der Einfahrstellung des Schaltwagens 21 in gestreckter Lage stehen und neben einer exakten Parallelführung des Fahrgestells 21 eine unmittelbare übertragung von am Fahrgestell 21 insbesondere bei Kurzschlußströmen auftretenden mechanischen Belastungen auf die Bodenplatte 24.1 und damit eine Entlastung der Gewindespindel 26 bewirken.

Die zum Schalterraum 15 hin offenen Isolierhülsen 12 durchgreifen Durchbrüche 33 in der Trennwand 13, wobei den oberen, in einer waagerechten Reihe nebeneinander angeordneten Durchbrüchen 33 eine gemeinsame Shutterblende 34 und der unteren Reihe von Durchbrüchen 33 eine gemeinsame Shutterblende 35 zugeordnet ist. Die Shutterblenden 34,35 sind höhenverstellbar parallel,zur Trennwand 13 an ihren beiden senkrechten Seitenkanten in senkrechten Führungsschienen 36 verschiebbar geführt. Die Anordnung ist dabei so getroffen, daß in der Einfahrstellung des Fahrgestells 21 (Figur 1) bei in die Durchbrüche 33 eingeführten Kontaktarmen 17 die obere Shutterblende 34 oberhalb der zugehörigen oberen Durchbrüche 33 und die untere Shutterblende 35 unterhalb der zugeordneten unteren Reihe von Durchbrüchen 33 steht.

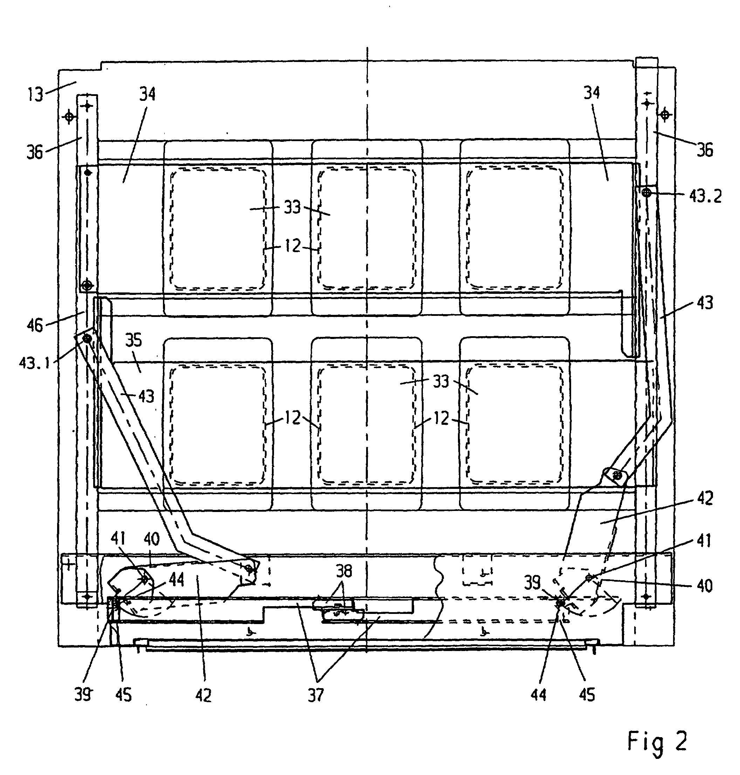

Um die Shutterblenden 34,35 aus ihrer in Figur 1 dargestellten Offenstellung in die in Figur 2 gezeigte Schließstellung zu überführen, in welcher die Shutterblenden 34,35 die jeweils zugerodnete waagerechte Reihe von Durchbrüchen 33 gegen manuellen Zugriff abdecken, ist eine Getriebeanordnung vorgesehen, die eine in eine Richtung gehende zentrale Antriebsbewegung in eine gegenläufige Antriebsbewegung an den Shutterblenden 34,35 umsetzt. Dadurch können die waagerechten Reihen von Durchbrüchen 33 in der Höhe eng übereinander angeordnet werden, weil die Shutterblenden 34 und 35 bei der Öffnungsbewegung in die Freigabestellung voneinander weg in die Position gemäß Figur 1 verstellt werden.

Wenn der von der Antriebsanordnung erzeugte Verstellhub kleiner ist als der Hub, den die Shutterplatinen 34,35 auszuführen haben, wird zweckmäßig ein übersetzendes Hebelgetriebe angewandt. Sonst kann auch eine biegsame Schubwelle in der Art eines Bowdenzuges zur Anwendung gelangen. Als übersetzendes Hebelgetriebes eignet sich insbesondere eine gegenüber der Trennwand verschiebbare gehalterte Schubstangenanordnung, die quer zur Verstellrichtung der Shutterplatinen 34,35, gelagert ist und sich unterhalb der unteren Reihe von Durchbrüchen 33 in solcher Anordnung befinden kann, daß die untere Shutterblende in Freigabestellung in einen Spalt zwischen der Trennwand 13 und dem Hebelgetriebe eintaucht. Zusätzlich zur engen Anordnung der übereinander liegenden Reihen von Durchbrüchen 33 kann so auch das Hebelgetriebe in enger Zuordnung zu den unteren Durchbrüchen 33 angeordnet werden, wodurch sich insgesamt ein kompakter Aufbau auf geringer Fläche ergibt. Die Schubstangenanordnung besteht insbesondere aus zwei spiegelbildlich ausgebildeten, achsengleich gelagerten Teilschubstangen 37, die sich mit ihrem längsmittigen Ende 38 überlappen und gemeinsam mit einem äußeren Antrieb in gegenseitig starrer Zuordnung kuppelbar sind. Die Schubstangenanordnung 37,38 ist im Bereich. ihrer gegenüberliegenden Enden mit je einem Hebelarm 39 von zweiarmigen Hebeln 40 gekuppelt, deren Drehpunkte 41 ortsfest gegenüber der Trennwand 13 stehen und an deren zweite Hebelarme 42 je eine Stützstange 43, angelenkt ist, die andernends jeweils mit einer der Shutterblenden 34,35 gelenkig verbunden sind. Die Drehpunkte 41 der zweiarmigen Hebel 40 befinden sich in senkrechter Projektion seitlich neben den äußeren Durchbrüchen 33, wobei der erste Hebelarm 39 kürzer als der zweite Hebelarm 42 ist und mit einem Gleitzapfen 44 in einer senkrecht zur Verstellrichtung der Teilschubstangen 37 verlaufenden Schlitzführung 45 geführt ist. Die Drehpunkte 41 liegen dabei oberhalb der Teilschubstangen 37.

In der Position gemäß Figur 2 befinden sich die Shutterblenden 34,35 in Schließstellung und die Schubstangenanordnung 37 in einer seitlich gegenüber einer Mittelstellung verschobenen Endposition, vorliegend in der linken Endposition. In dieser Lage befindet sich der dort angeordnete zweiarmige Hebel 42 in annähernd paralleler Stellung zur zugehörigen Teilschubstange 37, wobei sein freies Ende zur Mitte hin weist. Die mit dem zweiten Hebelarm 42 verbundene Stützstange 43 ist von der Mitte weg geknickt schräg nach oben am linken unteren Durchbruch 33 vorbei an eine Lasche 46 herangeführt und damit gelenkig verbunden, die ihrerseits innerhalb der benachbarten linken Führungsschiene 36 mit der Unterseite der oberen Shutterblende 34 verbunden ist. Der andere zweiarmige Hebel 40 befindet sich dagegen in einer Schwenklage, in welcher der zweite, längere Hebelarm 42 nach oben, vorliegend über den senkrechten Scheitelpunkt hinweg zur dort befindlichen, rechten Führungsschiene hin geschwenkt ist. Dementsprechend befindet sich das freie Ende 43.2 der daran angelenkten Stützstange 43 in einer Höhe, die oberhalb des freien Endes der anderen Stützstange 43 liegt. Das obere Ende 43.2 der rechten Stützstange 43 ist dabei über eine nach unten gerichtete, in der rechten Führungsschiene 36 angeordnete Lasche mit der unteren Shutterblende 35 verbunden.

Sollen die Shutterblenden 34,35 in eine Freigabestellung gemäß Figur 1 gesteuert werden, dann wird mittels des nachfolgend noch näher beschriebenen Anstriebs die Schubstangenanordnung 37,38 in der Gegenrichtung, gemäß Fig 2 nach rechts, verschoben. Dadurch werden über die Gleitgelenke 44,45 die zweiarmigen Hebel 40 entgegen dem Uhrzeigersinn geschwenkt, wobei aufgrund der spiegelsymmetrischen Ausbildung und Lagerung der Teilschubstangen 37, der Hebel 40 und der Stützstangen 43 in der Mittelstellung eine spiegelbildliche Lage dieser Teile mit gegengleicher Neigung der Hebel 40 und gleicher Höhenlage der Enden 43.1 und 43.2 der Schubstangen 43 erreicht wird. Beim weiteren Verschieben der Schubstangenanordnung 37 über die Mittellage hinaus, vorliegend nach rechts, schwenkt der rechte Hebel weiter gegen den Uhrzeigersinn, bis der rechte längere Hebelarm 42 zumindest annähernd waagrecht und der linke Hebelarm 42 über die obere senkrechte Mittelstellung hinaus nach links verstellt ist, die Hebel 40 also gegengleiche Lage gegenüber der Anordnung nach Figur 2 aufweisen. Dementsprechend sind dann auch die zugehörigen Stützstangen 43 in gegengleiche Lage verstellt, so daß dann das nach oben gewanderte freie Ende 43.1 die zugehörige obere Shutterblende 34 nach oben und das nach unten gewanderte freie Ende 43.2 der anderen Stützstange 43 die damit gekoppelte untere Shutterblende 35 nach unten und in Teilüberdeckung mit dem Hebel 40 bzw. der Schubstangenanordnung 37 gestellt hat.

Die äußere Antriebsanordnung für die vorbeschriebene Getriebeanordnung ist in der Kassette 24 angeordnet und weist eine parallel zur Schubstangenanordnung 37,38 verschiebbar gelagerte Schieberplatine 47 auf, die mit einem Steckkupplungsteil 48 mit den sich überlappenden Endstücken 38 der Teilschubstangen 37 in Steckeingriff treten, wenn die Kassette 24 in das mit der Trenn-wand 13 versehene Gerüst eingesetzt ist. Die Shutterplatine 47 befindet sich gemäß Figur 3 bezogen auf die Längsachse der Gewindespindel 26 in einer Äußeren (linken) Ausgangslage, in der sich das Gewindemutterstück 29 nahe an der Traverse 25 und das Fahrgestell 21 demnach in Ausfahrstellung befindet. Die Kontaktarme 17 der Schalter 16 befinden sich entfernt von den Durchbrüchen 33 bzw. mit Abstand von den zugeordneten Shutterblenden 34,35. Mit der Gewindespindel 26 ist über die in ihrer axialen Verlängerung liegende Antriebswelle ein Kegelritzel 48 antriebsverbunden, das mit einem Kegelzahnrad 49 kämmt, das auf einer senkrecht auf der Bodenplatte 24.1. stehenden Achse 49.1 drehbar gelagert ist und einen radial überstehenden, parallel zur Achse 49.1 und zur Bodenplatine 24.1 gerichteten Exzenterzapfen 50 trägt. Die Achse 49.1 steht dabei senkrecht mit Abstand zur Gewindespindel 26 hin verstellt neben der Schieberplatine 47. Die Schieberplatte 47 verläuft parallel zur Ebene der Laufschienen 23 und benachbart zur Schubstangenanordnung 37 bzw. der Trennwand 13.

Die Schieberplatine 47 ist mit einer senkrecht zu ihrer Verstellrichtung, also parallel zur Längsachse der Gewindespindel 26 stehenden Vortransportflanke 51 versehen, die im Wirkungsbereich des Exzenterzapfens 50 zu Beginn und während des Verlaufs der ersten Umdrehung der Gewindespindel 26 bei der Verstellung des Fahrgestells aus der Ausfahrstellung zur Einfahrstellung hin steht. In Figur 3 ist die Ausgangsstellung dargestellt. Wird die Gewindespindel 26 davon ausgehend im Uhrzeigersinn gedreht, wandert auch der Exzenterzapfen im Uhrzeigersinn weiter und drückt über die Vortransportflanke 51 die Schieberplatine 47 (immer in bezug auf die Längsachse der Gewindespindel 26) nach rechts (in Figur 3 nach unten), wobei das rechte Ende 47.1 in die andere, mit dünnen Linien dargestellte, nach rechts verschobene Position gelangt. Der Exzenterzapfen 50 ist dann aus der mit 0 gekennzeichneten Anfangslage nach einer Umdrehung der Gewindespindel 26 in die mit 1 gekennzeichnete Drehlage verstellt, in welcher er die dann entsprechend verschobene Vortransportflanke 51 verläßt. In den jeweiligen Endlagen wird die Schieberplatine 47 mittels einer Kippfederanordnung 52 gehalten. Bei den weiteren, in gleicher Drehrichtung ausgeführten Umdrehungen des Exzenterzapfens 50 tritt keine erneute oder zusätzliche Verstelleinwirkung auf die Schieberplatine 47 ein. Die damit gekoppelte Getriebeanordnung für die Shutterblenden 34,35 bleibt folglich in der dann erreichten Freigabestellung.

Um die Schieberplatine 47 wieder in die in Figur 3 dargestellte Ausgangslage zurückzuführen, und diesen Funktionsschritt nur bei der letzten Rückstellumdrehung der Gewindespindel in die in Figur 3 gezeigte Position zu bewirken, ist auf der Schieberplatine ein im Bereich des linken Endes 47.2 schwenkbar gelagerter Steuerhebel 51.1 vorgesehen, der eine parallel zur Vortransportflanke 51 gerichtete Rücktransportflanke 53 aufweist, die mit solchem Abstand von der Vortransportflanke 51 steht, daß der Exzenterzapfen 50 in den dazwischen gebildeten Spalt 54 ungehindert eintauchen kann. Um sicherzustellen, daß die Rücktransportflanke nur bei der letzten Rückstelldrehung der Gewindespindel 26 in Wirkeingriff mit dem Exzenterzapfen 50 tritt, ist der Steuerhebel 51.1 mit einer Steuerflanke 55 versehen, die senkrecht zur Ebene der Schieberplatine 47 nach oben abgekantet ist und in Verschieberichtung der Schieberplatine 47 eine Neigung aufweist, die über deren Verschiebeweg der Steigung der Gewindespindel 26 entspricht. Mit der Steuerflanke 55 steht ein Steuerstab 56.1 in Gleiteingriff, der parallel zur Gewindespindel 26 und damit senkrecht zum Verschiebeweg der Schieberplatine 47 verschiebbar gelagert ist. Am Steuerstab greift eine Feder 57.1 an, deren Kraftkomponente den Steuerstab 56.1 zum Steuerhebel 51.1 hin belastet. Um den Steuerstab in der in Figur 3 dargestellten Ausgangslage gegen die Kraft der Feder 57.1 zu halten, wenn das Fahrgestell 21 bzw. das Gewindemutterstück 29 in der der Ausfahrstellung zugeordneten Position steht, ist der Steuerstab 56.1 mit einem justierbren Anschlag 56 versehen, der mit einem am Lenkerhebel 30 ausgebildeten Gegenanschlag 57 zusammenwirkt. Der Anschlag 56 ist dabei so justiert, daß die Rücktransportflanke 53 in der dargestellten Position parallel zur Vortransportflanke 51 steht.

Bei der Drehung der Gewindespindel 26 im Uhrzeigersinn wird nicht nur die Schieberplatine 47 nach rechts verlagert, sondern der Steuerstab 56 wandert entsprechend der Steigung der Gewindespindel 26 zur Schieberplatine 47 hin und erreicht bei der ersten Drehung, ausgehend von der zugeordneten Position 0 die Position 1. Aufgrund der darauf abgestimmten Neigung der Steuerflanke 55 bleibt der Steuerhebel 51.1 jedoch in unveränderter Lage gegenüber der Vortransportflanke 51 bzw. der Schieberplatine 47 stehen. Die Neigung der Steuerflanke 55 gleicht also den Vorschub des Steuerstabes 56 über den Verstellweg der Schieberplatine 47 aus. Beim weiteren Drehen der Gewindespindel 26 verläßt der Exzenterzapfen 50 gemäß vorstehender Beschreibung die Vortransportflanke 51, so daß der Steuerhebel 51.1 keine Schwenkbewegung erfährt und die in dünnen Linien dargestellte, gegenüber der Vortransportflanke 51 unveränderte Position gemäß der mit dünnen Linien dargestellten rechten Lage einnimmt. Beim weiteren Drehen der Gewindespindel 26 wird jedoch bei stillstehender Schieberplatine 47 kein Ausgleich aufgrund der Neigung der Steuerflanke 55 mehr erreicht und der Steuerhebel 51.1 daher durch die Kraft der Feder 57 in Verstellrichtung des Gewindemutterstücks 29 verschwenkt. Dadurch wird aber die Rücktransportflanke 53 bereits während des ersten Umlaufs des Exzenterzapfens 50 aus dessen Wirkungsbereich herausgeschwenkt. Eine zusätzliche Beeinflussung findet daher auch bei den weiteren Umdrehungen der Gewindespindel 26 nicht statt. Auch bei der Rückdrehung der Gewindespindel 26 bleibt daher der Steuerhebel 51.1. zunächst in seiner gegenüber der Vortransportflanke 51 verschwenkten Position, wie sie in der gestrichelt dargestellten Lage 55.1 angedeutet ist.

Erst dann, wenn während der letzten Rückstellumdrehung des Exzenterzapfens 50 der Gegenanschlag 57 wieder in Position 2 an den Anschlag 56 anstößt und bei der weiteren Drehung bis hin zur Position 1 der Steuerhebel 51.1 wieder in die mit dünnen Linien dargestellte rechte und gegenüber dem Steuerschieber 47 unverschwenkte Lage zurückgekehrt ist, kommt der Exzenterzapfen 50 in Anlage mit der Rücktransportflanke 53. Die dann einsetzende letzte Rückdreh-Umdrehung der Gewindespindel 26 bewegt den Exzenterzapfen 50 in seine Ausgangsposition 0 und bewirkt durch sein Zusammenspiel mit der Rücktransportflanke 53 auch die Rückstellung der damit verbundenen Steuerplatine 47 in ihre linke (obere) Ausgangslage. Der Hub der Gewindespindel wird dabei in analoger Weise wieder durch die Neigung der Steuerflanke 55 während der Verschiebung der Schieberplatine 47 ausgeglichen. Die Shutterplatinen 34,35 sind dann wieder in ihre anfängliche, der Ausfahrstellung des Fahrgestells 21 entsprechende Schließstellung zurückgeführt.

## Patentansprüche

1. Schaltfeld, insbesondere für Mittelspannung, mit einem Gerüst (1), in dem ein Fahrgestell (21) mit mindestens einem daran festgesetzten Schalter (16) auf Laufschienen (23) verfahrbar angeordnet ist, mit einem in Einfahrrichtung des Fahrgestells (21) weisenden Paar von übereinander angeordneten Kontaktarmen (17) am jeweiligen Schalter (16) und mit einer senkrecht zur Fahrrichtung des Fahrgestells (21) stehenden, im Gerüst (1) vorgesehenen Trennwand (13), in der für Kontaktarme (17) Durchbrüche (33) vorgesehen sind, und mit einer den Durchbrüchen (33) zugeordneten Shutteranordnung (34, 35), die über eine mit dem Fahrgestell (21) kuppelbare reservierbare Getriebeanordnung die Durchbrüche (33) abhängig von der Fahrstellung des Fahrgestells (21) verschließt und freigibt, wobei in der Trennwand (13) für jeden Kontakt (17) ein Durchbruch (33) vorgesehen ist, den übereinander angeordneten Durchbrüchen (33) eigene Shutterblenden (34, 35) zugeordnet sind und die Shutterblenden (34, 35) mittels der Getriebeanordnung aus der Schließstellung voneinander weg in die Freigabestellung verstellt werden, **dadurch gekennzeichnet, dass** die Getriebeanordnung ein Hebelgetriebe mit einer quer zur Verstellrichtung der Shutterblenden (34, 35) verschiebbar gegenüber der Trennwand (13) gehaltenen Schubstangenanordnung (37, 38) aufweist, die beidendig je mit einem Hebelarm (39) von zweiarmigen Hebeln (40) in Antriebsverbindung steht, deren Drehpunkte (41) ortsfest gegenüber der Trennwand (13) sind und deren zweite Hebelarme (42) an Stützstangen (43) angelenkt sind, die andernends mit je einer Shutterblende (34, 35) gekuppelt sind, wobei die zweiarmigen Hebel (40) und die Stützstangen (43) spiegelsymmetrisch ausgebildet sowie gelagert sind und sich dabei in der Mittelstellung der Schubstangenanordnung (37, 38) in spiegelbildlicher Lage gegenüberstehen.

2. Schaltfeld nach Anspruch 1, **dadurch gekennzeichnet, dass** bei unterhalb der Shutterblenden (34, 35) angeordneter Schubstangenanordnung (37, 38) und übereinander angeordneten Shutterblenden (34, 35) ein oberes Ende (43.2) einer Stützstange (43) mit Abstand oberhalb der unteren Shutterblende (35) endet und über eine Stützlasche mit der unteren Shutterblende (35) in Eingriff steht und dass die zweite Stützstange (43) an der Unterseite der oberen Shutterblende (34) angelenkt ist.

3. Schaltfeld nach Anspruch 1 oder 2, **dadurch gekennzeichnet, dass** die Schubstangenanordnung zwei spiegelbildlich ausgebildete, achsengleich gelagerte Teilschubstangen (37) aufweist, die sich in der Längsmitte überlappen und gemeinsam mit einem Antrieb in gegenseitig starrer Zuordnung kuppelbar sind.

4. Schaltfeld nach Anspruch 3, **dadurch gekennzeichnet, dass** der Antrieb in einer gegenüber der Trennwand (13) in Fahrrichtung des Fahrgestells (21) verstellbaren und das Fahrgestell (21) tragenden Kassette (24) angeordnet ist sowie eine parallel zur Schubstangenanordnung (37, 38) verschiebbar gelagerte Schieberplatine (47) mit einem Steckkupplungsteil (48) aufweist, welches mit der Schubstangenanordnung (37, 38) in lösbarem Eingriff steht.

5. Schaltfeld nach Anspruch 4, **dadurch gekennzeichnet, dass** die Schieberplatine (47) mit einer dem Verfahren des Fahrgestells (21) dienenden ortsfest gelagerten und gegen Axialverschiebung gesicherten Gewindespindel (26) in Antriebsverbindung steht, derart, dass bei der Einfahrbewegung des Fahrgestells (21) mit der ersten Drehung beziehungsweise bei der Ausfahrbewegung mit der letzten Drehung der Gewindespindel (26) die Schieberplatine (47) jeweils in eine Stellung verschoben wird, in welcher die Shutterblenden (34, 35) die Durchbrüche (33) freigeben/verschließen.

6. Schaltfeld nach Anspruch 4 oder 5, **dadurch gekennzeichnet, dass** die Schieberplatine (47) eine senkrecht zu ihrer Verstellrichtung stehende Vortransportflanke (51) aufweist, die im Wirkungsbereich eines mittels der Gewindespindel (26) antreibbaren Exzenterzapfens (50) steht, dass in ausgefahrener Stellung des Fahrgestells (21) mit Abstand parallel zur Vortransportflanke (51) eine Rücktransportflanke (53) eines einendig schwenkbar an der Schieberplatine (47) gelagerten Steuerhebels (51.1) steht, wobei die Flanken (51, 53) annähernd tangential zum Schwenkbogen des Steuerhebels (51.1) verlaufen und der Excenterzapfen (50) im Eingriffsschwenkbereich in den Spalt (54) zwischen den Flanken (51, 53) eintaucht, dass der Steuerhebel (51.1) eine Steuerflanke (55) aufweist, die in Verschieberichtung der Schieberplatine (47) eine Neigung aufweist, die über deren Verschiebeweg der Steigung der Gewindespindel (26) entspricht, dass im Gleiteingriff mit der Steuerflanke (55) ein Steuerstab (56.1) steht, der parallel zur Gewindespindel (26) senkrecht zum Verschiebeweg der Schieberplatine (47) verschiebbar gelagert ist sowie einen Anschlag (56) trägt, der in ausgefahrener Stellung des Fahrgestells (21) unter der Kraft einer zur Steuerflanke (55) hin wirkenden Feder (57.1) an einem mit einer Gewindemutter (29) verbundenen Gegenanschlag (57) anliegt, wobei die Gewindemutter (29) auf die Gewindespindel (26) aufgedreht ist.

7. Schaltfeld nach Anspruch 6, **dadurch gekennzeichnet, dass** der Exzenterzapfen (50) an einem Kegelzahnrad (49) vorgesehen ist, dessen Achse (49.1) senkrecht zur und mit Abstand neben der Schieberplatine (47) steht und das mit einem unmittelbar mit der Gewindespindel (26) gekuppelten Kegelritzel (48) kämmt.

8. Schaltfeld nach Anspruch 3 oder einem der folgenden, **dadurch gekennzeichnet, dass** der Antrieb in einer in das Gerüst (1) einschiebbaren und daran verriegelbaren Kassette (24) angeordnet ist, in welcher zusätzlich das Fahrgestell (21) auf parallel zur Gewindespindel (26) verlaufenden Laufschienen (23) fahrbar gelagert und mit der Gewindespindel (26) gekuppelt ist und in welcher die Schieberplatine (47) parallel zur Ebene der Laufschienen (23) benachbart zur die Durchbrüche (33) aufweisenden Trennwand (13) verschiebbar angeordnet ist.

## Claims

1. Switchgear panel, in particular, for medium voltage, having a framework (1) in which a truck (21) with at least one switch (16) attached thereto is arranged drivable on rails (23), with a pair of contact arms (17) on the respective switch (16), arranged one above the other pointing in the insertion direction of the truck (21) and with a separating wall (13) provided in the framework (1) and standing perpendicular to the travel direction of the truck (21), in which separating wall (13) openings (33) are provided for the contact arms (17), and with a shutter arrangement (34, 35) assigned to the openings (33) said shutter arrangement opening and closing the openings (33), dependent upon the travel position of the truck (21), via a reservable gearing arrangement which may be coupled to the truck (21), whereby in the separating wall (13) an opening (33) is provided for each contact (17), separate shutters (34, 35) are assigned to the openings (33) arranged over one another and the shutters (34, 35) are displaced away from each other by means of the gearing arrangement from the closed position into the open position, **characterised in that** the gearing arrangement has a lever mechanism with a push rod arrangement (37, 38) held displaceable relative to the separating wall (13) transverse to the displacement direction of the shutters (34, 35) which is linked in driving connection at each end with,
respectively, one lever arm (39) of two-armed levers (40), the pivot points (41) of said levers being in fixed position relative to the separating wall (13) and their second lever arms (42) being coupled to support rods (43), each linked at its other end to a shutter (34, 35), whereby the two-armed levers (40) and the support rods (43) are designed and mounted with mirror-image symmetry and, in the central position of the push rod arrangement (37, 38), stand opposed to each other in a mirror-image position.

2. Switchgear panel according to Claim 1, **characterised in that** with the push rod arrangement (37, 38) arranged below the shutters (34, 35) and with the shutters (34, 35) arranged one above the other, an upper end (43.2) of one push rod (43) ends at a distance above the lower shutter (35) and is linked via a support bracket to the lower shutter (35) and that the second support rod (43) is coupled to the underside of the upper shutter (34).

3. Switchgear panel according to Claim 1 or 2, **characterised in that** the push rod arrangement has two partial push rods (37) mounted on a common axis and designed with mirror-image symmetry, said partial push rods overlapping in the centre of their length and being capable of being coupled together to one drive in mutually rigid arrangement.

4. Switchgear panel according to Claim 3, **characterised in that** the drive is arranged in a cassette (24) adjustable relative to the separating wall (13) in the travel direction of the truck (21) and carrying the truck (21) and has a pusher panel (47) displaceably mounted parallel to the push rod arrangement (37, 38), with a push-in coupling member (48), which is in disconnectable engagement with the push rod arrangement (37, 38).

5. Switchgear panel according to Claim 4, **characterised in that** the pusher panel (47) is in driving connection with a lead screw (26) serving to drive the truck (21) and mounted in fixed position secured against axial displacement, such that during the insertion movement of the truck (21) with the first rotation or, during the withdrawal movement, with the last rotation of the lead screw (26), in each case the pusher panel (47) is pushed into a position in which the shutters (34, 35) release/close the openings (33).

6. Switchgear panel according to Claim 4 or 5, **characterised in that** the pusher panel (47) has a forward transport flank (51) standing perpendicular to its displacement direction, said forward transport flank lying within the operational range of an eccentric spigot (50) drivable by means of the lead screw (26), that in the withdrawn position of the truck (21), a reverse transport flank (53) of a control lever (51.1) mounted rotatably at one end on the pusher panel (47) lies at a distance parallel to the forward transport flank (51), whereby the flanks (51, 53) run approximately tangentially to the arc of rotation of the control lever (51.1) and the eccentric spigot (50) penetrates in the engagement rotation range into the gap (54) between the flanks (51, 53), that the control lever (51.1) has a control flank (55), which has an incline in the displacement direction of the pusher panel (47), said incline corresponding over its displacement travel to the pitch of the lead screw (26), that a control rod (56.1) is in sliding engagement with the control flank (55), said control rod being mounted parallel to the lead screw (26), displaceable perpendicular to the displacement travel of the pusher panel (47), and carrying a stop (56) which in the withdrawn position of the truck (21) lies, under the force of a spring (57.1) acting towards the control flank (55), against a counterstop (57) linked to a lead screw nut (29), whereby the lead screw nut (29) is screwed onto the lead screw (26).

7. Switchgear panel according to Claim 6, **characterised in that** the eccentric spigot (50) is provided on a bevel gear (49) whose axis (49.1) lies perpendicular to, at a separation from, and adjacent to the pusher panel (47) and which meshes with a bevel pinion (48) directly coupled to the lead screw (26).

8. Switchgear panel according to Claim 3 or one of the subsequent claims, **characterised in that** the drive is arranged in a cassette (24) insertable into the framework (1) and lockable to it, in which cassette additionally the truck (21) is drivably mounted on rails (23) running parallel to the lead screw (26) and is coupled to the lead screw (26) and in which the pusher panel (47) is displaceably arranged parallel to the plane of the rails (23), adjacent to the separating wall (13) having the openings (33).

## Revendications

1. Poste de commutation, notamment pour la moyenne tension, équipé d'un cadre (1) dans lequel est agencé de manière mobile sur des rails de roulement (23) un chariot (21) comportant au moins un commutateur (16) fixé dessus, de deux bras de contact (17) agencés l'un au-dessus de l'autre sur chaque commutateur (16) et orientés dans la direction d'insertion du chariot (21) et d'une cloison de séparation (13) prévue dans le cadre (1) perpendiculairement à la direction de déplacement du chariot (21); dans ladite cloison de séparation sont prévues des ouvertures (33) pour les bras de contact (17), et avec un agencement de volets obturateurs (34, 35) associé aux ouvertures (33), lequel ferme et libère les ouvertures (33) en fonction de la position du chariot (21) par l'intermédiaire d'un agencement d'engrenages réservé accouplé au chariot (21), une ouverture (33) étant prévue dans la cloison de séparation (13) pour chaque contact (17), les ouvertures (33) agencées les unes au-dessus des autres ayant leur propre volet obturateur (34, 35) et les volets obturateurs (34, 35) étant déplacés les uns des autres depuis la position de fermeture vers la position d'ouverture au moyen de l'agencement d'engrenages,
**caractérisé en ce que** l'agencement d'engrenages présente un mécanisme à levier avec un agencement de bielles (37, 38) tenu par rapport à la cloison de séparation (13) et pouvant être déplacé transversalement à la direction de déplacement des volets obturateurs (34, 35), ledit agencement de bielles étant en relation d'entraînement des deux côtés avec respectivement un bras (39) des leviers à deux bras (40), dont les points de pivot (41) sont fixes par rapport à la cloison de séparation (13) et dont le second bras de levier (42) est articulé sur des barres de support (43) qui sont couplées à l'autre extrémité chacune à un volet obturateur (34, 35), les leviers à deux bras (40) et les barres de support (43) étant montés et réalisés de manière symétrique en miroir et étant ainsi placés selon une situation réfléchissante dans la position centrée de l'agencement de bielles (37, 38).

2. Poste de commutation selon la revendication 1,
**caractérisé en ce que**, l'agencement de bielles (37, 38) étant placé sous les volets obturateurs (34, 35) et les volets obturateurs (34, 35) étant agencés les uns au-dessus des autres, une extrémité supérieure (43.2) d'une barre de support (43) se termine à une certaine distance au-dessus du volet obturateur inférieur (35) et est en contact avec le volet obturateur inférieur (35) par l'intermédiaire d'une patte de support et **en ce que** la seconde barre de support (43) est articulée sur le dessous du volet obturateur supérieur (34).

3. Poste de commutation selon la revendication 1 ou 2,
**caractérisé en ce que** l'agencement de bielles présente deux parties de bielle (37) montées sur le même axe et réalisées en miroir, lesquelles se chevauchent au milieu de leurs longueurs et peuvent être couplées ensemble à un entraînement dans une relation réciproque rigide.

4. Poste de commutation selon la revendication 3,
**caractérisé en ce que** l'entraînement est agencé dans une cassette (24) portant le chariot (21) et pouvant être déplacée par rapport à la cloison de séparation (13) dans la direction de déplacement du chariot (21) et qu'il présente une platine à coulisse (47) montée de manière à pouvoir être déplacée parallèlement à l'agencement de bielles (37, 38) et comportant une partie d'accouplement par enfichage (48), laquelle est en contact amovible avec l'agencement de bielles (37, 38).

5. Poste de commutation selon la revendication 4,
**caractérisé en ce que** la platine à coulisse (47) est en relation d'entraînement avec une broche filetée (26) servant à déplacer le chariot (21) montée de façon fixe et bloquée contre tout déplacement axial, de telle façon qu'avec la première rotation de la broche filetée (26) lors du mouvement d'insertion du chariot (21) ou avec la dernière rotation lors du mouvement de sortie, la platine à coulisse (47) est déplacée respectivement dans une position où les volets obturateurs (34, 35) libèrent ou ferment les ouvertures (33).

6. Poste de commutation selon la revendication 4 ou 5,
**caractérisé en ce que** la platine à coulisse (47) présente un flanc d'avance (51) perpendiculaire à sa direction de déplacement et situé dans la zone d'action d'un tenon excentrique (50) pouvant être entraîné au moyen de la broche filetée (26) ; **en ce que**, dans la position de sortie du chariot (21), un flanc de recul (53) d'un levier de guidage (51.1) monté à l'une de ses extrémités de façon pivotante sur la platine à coulisse (47) est situé parallèlement au flanc d'avance (51) et à distance de celui-ci, les flancs (51, 53) étant approximativement tangentiels à l'arc de pivotement du levier de guidage (51.1) et le tenon excentrique (50) pénétrant dans la zone d'action du pivotement dans la fente (54) située entre les deux flancs (51, 53); **en ce que** le levier de guidage (51.1) comporte un flanc de guidage (55) qui présente dans la direction de déplacement de la platine à coulisse (47) une inclinaison correspondant à l'inclinaison de la broche filetée (26) sur sa trajectoire de déplacement ; **en ce qu'**une barre de guidage (56.1) est en contact de friction avec le flanc de guidage (55), ladite barre de guidage est montée de façon mobile parallèlement à la broche filetée (26) et perpendiculairement à la trajectoire de déplacement de la platine à coulisse (47) et porte une butée (56) qui, en position de sortie du chariot (21), repose contre une contre-butée (57) reliée à un écrou fileté (29) sous l'effet de la force d'un ressort (57.1) agissant en direction du flanc de guidage (55), l'écrou fileté (29) étant vissé sur la broche filetée (26).

7. Poste de commutation selon la revendication 6,
**caractérisé en ce que** le tenon excentrique (50) est prévu sur une roue dentée conique (49) dont l'axe (49.1) est perpendiculaire à la platine à coulisse (47) et situé à l'écart de celle-ci et qui s'engrène sur un pignon conique (48) directement couplé à la broche filetée (26).

8. Poste de commutation selon la revendication 3 ou l'une quelconque des revendications suivantes,
**caractérisé en ce que** l'entraînement est agencé dans une cassette (24) pouvant être insérée dans le cadre (1) et verrouillée sur celui-ci, le chariot (21) est en plus monté dans ladite cassette de façon mobile sur des rails de roulement (23) parallèles à la broche filetée (26) et couplé à la broche filetée (26) et la platine à coulisse (47) est agencée de manière à pouvoir être déplacée parallèlement au plan des rails de roulement (23) jusqu'à proximité de la cloison de séparation (13) présentant les ouvertures (33).
